(19) **Europäisches Patentamt**

**European Patent Office**

**Office européen des brevets**

(11) **EP 1 708 184 A2**

(12) **EUROPEAN PATENT APPLICATION**

(43) Date of publication:
**04.10.2006 Bulletin 2006/40**

(51) Int Cl.:
***G11B 7/09*** (2006.01)

(21) Application number: **06111972.3**

(22) Date of filing: **30.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.04.2005 KR 2005027556**

(71) Applicant: **SAMSUNG ELECTRONICS CO., LTD.**
**Suwon-si,**
**Gyeonggi-do (KR)**

(72) Inventors:
- **Choi, Woo-seok**
  **Seoul (KR)**
- **Kim, Tae-kyung**
  **Seoul (KR)**
- **Chung, Chong-sam**
  **Gyeonggi-do**
  **Hwaseong-si (KR)**

(74) Representative: **Waddington, Richard et al**
**Appleyard Lees,**
**15 Clare Road**
**Halifax HX1 2HY (GB)**

(54) **Optical pickup, optical recording and/or reproducing apparatus using the same, and method for detecting tracking error signal**

(57) An optical pickup and an optical recording and/or reproducing apparatus employing the optical pickup, wherein the optical pickup includes: a light source (11); an objective lens (17) to collect and focus an incident beam on an information storage medium (10); a holographic grating (13) to split light emitted by the light source (11) into a main beam and first and second sub-beams by diffraction and to provide, or create, a continuously changing wavefront in the first and second sub-beams to reduce the amplitude of an AC component of a sub-push-pull (SPP) signal of the first and second sub-beams; and a photodetector (19) to receive the main beam and the first and second sub-beams that are focused on and reflected from the information storage medium (10) and to obtain a main push-pull (MPP) signal of the main beam and a SPP signal of the first and second sub-beams.

FIG. 5

**(Cont. next page)**

EP 1 708 184 A2

## FIG. 11

MPP

SPP

NO SHIFT OF OBJECTIVE LENS

DC OFFSET

DC OFFSET

EXISTING SHIFT OF OBJECTIVE LENS

**Description**

The present invention relates to an optical recording and/or reproducing apparatus, and more particularly, to an optical pickup designed to realize a tracking servo compatible between optical discs having different track pitches, an optical recording and/or reproducing apparatus employing the optical pickup, and a method to track error signal detection.

The emergence of various formats of optical discs necessitates an optical disc recording and/or reproducing apparatus designed to achieve compatibility between different formats of discs. For example, DVD ±R/RW type discs use the same light source wavelength and objective lens numerical aperture (NA) but a different track pitch than a DVD-RAM type disc. A conventional tracking servo method such as a differential push-pull (DPP) designed for a single track pitch typically does not offer compatibility with a disc having a different track pitch than the single track pitch. Thus, a tracking servo technology is needed to achieve compatibility between discs with different track pitches using a single optical pickup.

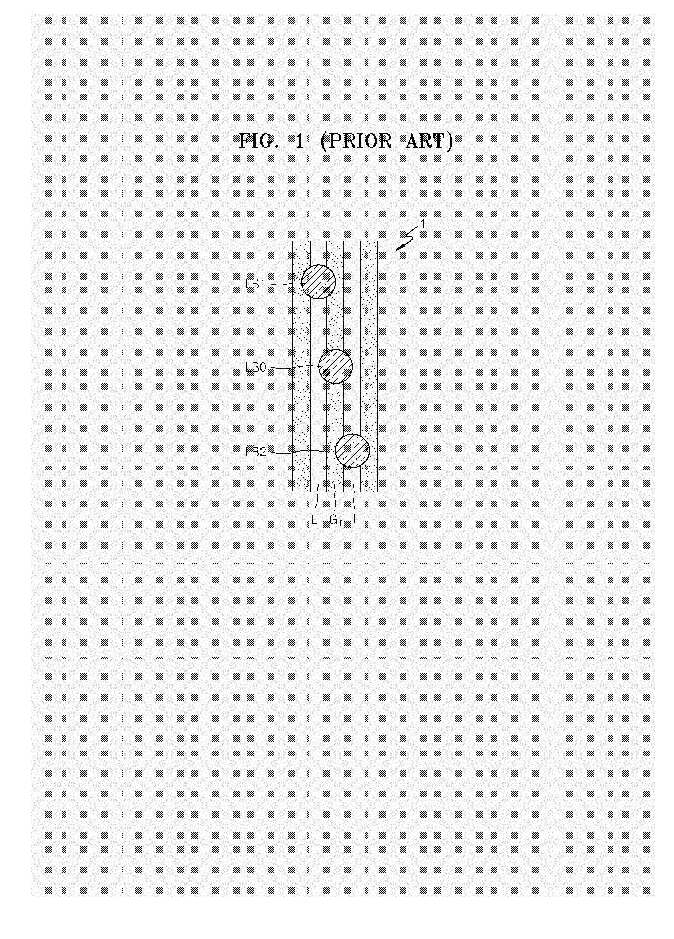

In an optical pickup designed to realize a tracking servo using a typical DPP method, light emitted from a light source is split into a zero-order diffracted beam that is a main beam and plus and minus first-order diffracted beams that are sub-beams by a grating. The three light beams are focused to spots on the surface of an optical disc 1 by an objective lens as shown in FIG. 1.

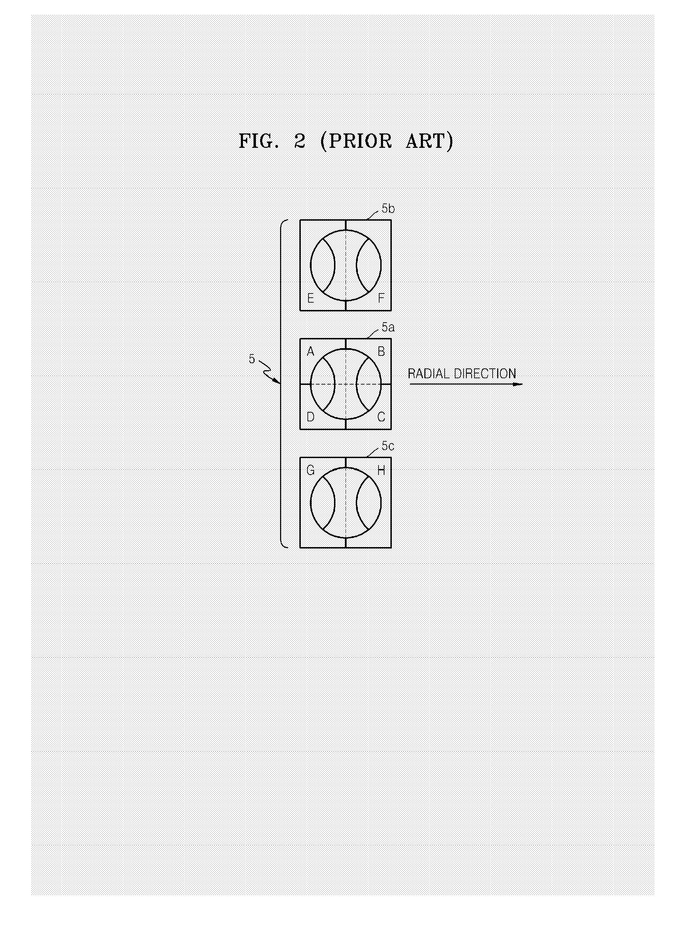

FIG. 1 illustrates a light spot created on the optical disc 1 in a typical DPP method. Referring to FIG. 1, a main beam spot LB0 is located on a groove Gr of the optical disc 1 while sub-beam spots LB1 and LB2 are located on lands L that are 1/2 track pitch away from the main beam spot LB0. The main beam and the sub-beams reflected from the optical disc 1 are received on a photodetector 5 as shown in FIG. 2.

Referring to FIG. 2, the photodetector 5 includes a main photodetector 5a receiving a main beam and sub photodetectors 5b and 5c receiving two sub-beams. A main push-pull (MPP') signal with respect to the main beam is produced from detection signals generated by the main photodetector 5a while a sub-push-pull (SPP') signal with respect to the sub-beams are produced from detection signals generated by the sub photodetectors 5b and 5c. The main phtodetector 5a is divided into two halves in both the radial and tangential directions while the sub photodetectors 5b and 5c are respectively partitioned into two halves in a radial direction.

Where detection signals are denoted by the same reference characters as those of their corresponding light-receiving areas, i.e., four light-receiving areas A, B, C, and D of the main photodetector 5a, two light-receiving areas E and F of one sub photodetector 5b, and two light-receiving areas G and H of the other sub photodetector 5c, the MPP' signal of the main beam and the SPP1' and SPP2' signals of the sub-beams are defined by the sub equations 1 (a), 1 (b) and 1 (c) of Equation (1) :

$$\text{MPP' = (A+D) - (B+C)} \qquad 1(a)$$

$$\text{SPP1' = E-F} \qquad 1(b)$$

$$\text{SPP2' = G-H} \qquad 1(c)... (1)$$

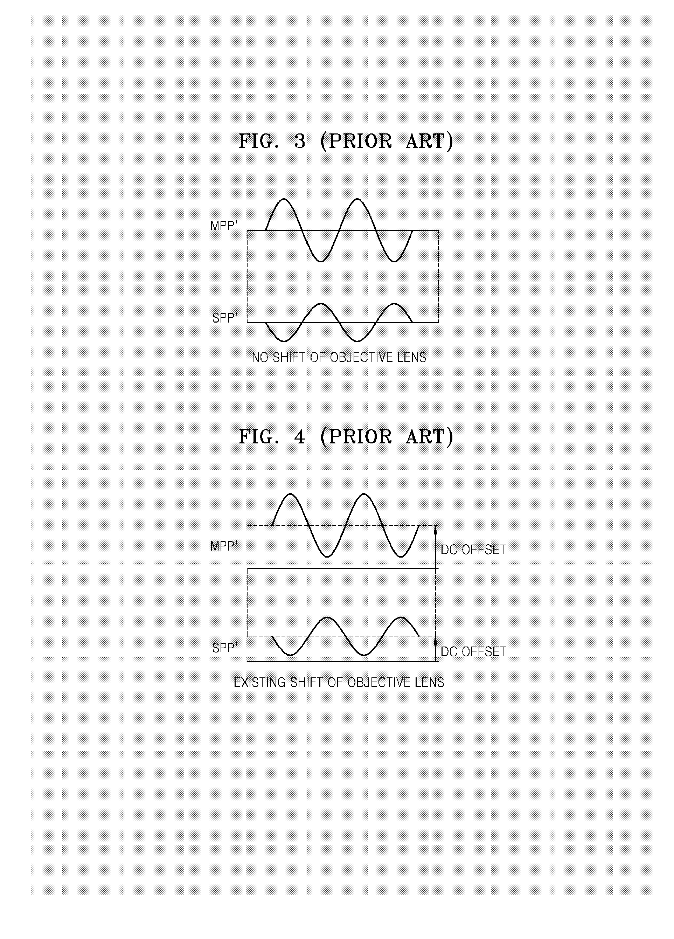

Because the main beam spot LB0 is located on groove Gr and the sub-beam spots LB1 and LB2 are located on lands L that are ±1/2 track pitch away from the main beam spot LB0, the MPP' signal has an opposite phase to a SPP' (SPP1'+SPP2') signal as shown in FIG. 3. Where there is a shift of an objective lens, a direct current (DC) offset is introduced into the MPP' and SPP' signals as shown in FIG. 4. In this regard, FIG. 3 shows the waveforms of the MPP' and SPP' signals when there is no shift of an objective lens and FIG. 4 shows the waveforms of the MPP' and SPP' signals when there is a shift of an objective lens.

Since the DC offset has the same phase as the MPP' and SPP' signals, a tracking error signal detected by a DPP method, i.e., a DPP signal is defined as shown in the following Equation (2):

$$DPP = MPP' - K \times SPP'$$

$$= (A+D)-(B+C) - K \times ((E-F)+(G-H)) \qquad \ldots (2)$$

where K is a coefficient, and the other terms are as previously described. As a result of the operation in Equation (2), the DPP signal from which the DC offset induced due to a shift of an objective lens is removed can be obtained.

As described above, an optical pickup designed to realize a tracking servo using a typical DPP method uses a grating to split light into three beams, of which the sub-beams that are plus and minus first-order diffracted beams are focused onto a location of an optical disc that are ±1/2 track pitches away from a main beam that is a zero-order diffracted beam. However, because a position where a sub-beam is focused is fixed during the design and assembling in an optical pickup using a DPP method, it is typically difficult to realize a tracking servo for an optical disc having a different track pitch than a specific track pitch set for the optical pickup to optimally perform recording/reproduction. Thus, using the typical DPP method, it is difficult to achieve compatibility with an optical disc having a different track pitch.

The invention provides an optical pickup to realize a tracking servo compatible with a plurality of optical discs having different track pitches, an optical recording and/or reproducing apparatus employing the optical pickup, and a method for tracking error signal detection.

According to the present invention there is provided an apparatus and method as set forth in the appended claims. Preferred features of the invention will be apparent from the dependent claims, and the description which follows.

According to an aspect of the present invention, there is provided an optical pickup including: a light source; an objective lens to collect and focus an incident beam on an information storage medium; a holographic grating to split light emitted by the light source into a main beam and first and second sub-beams by diffraction to create a continuously changing wavefront in the first and second sub-beams to reduce the amplitude of an alternating current (AC) component of a sub-push-pull (SPP) signal of the first and second sub-beams; and a photodetector to receive the main beam and the first and second sub-beams where focused on and reflected from the information storage medium and formed to obtain a main push-pull (MPP) signal of the main beam and a SPP signal of the first and second sub-beams.

The holographic grating may provide, or create, a continuously changing wavefront by adding astigmatisms, spherical aberrations, or defocus to the first and second sub-beams to reduce the amplitude of an AC component of the SPP signal of the first and second sub-beams. The SPP signal of the first and second sub-beams may have a DC component as the main component where a shift of the objective lens occurs. The main beam may be a zero-order diffracted beam and the first and second sub-beams may be plus and minus first-order diffracted beams. The main beam and the first and second sub-beams may be focused on the same track of the information storage medium.

The light source may be adapted to emit light in a red wavelength region and a tracking servo may be realized to achieve compatibility between DVD-RAM and DVD±R/RW type media. The light source may be adapted to emit light in a blue wavelength region and a tracking servo compatible between blu-ray disc (BD) and high-definition DVD (HD DVD) type media may be realized.

According to another aspect of the present invention, there is provided an optical recording and/or reproducing apparatus including: an optical pickup; and a signal processor adapted to use signals detected by a photodetector in the optical pickup to detect a tracking error signal (TES) defined by MPP- K xSPP, where MPP and SPP respectively denote a main push-pull signal (MPP) of the main beam and a sub-push-pull signal (SPP) of the first and second sub-beams and K is a coefficient.

According to a further aspect of the present invention, there is provided a method of detecting a tracking error signal, including: splitting light emitted by the light source into a main beam and first and second sub-beams by diffraction to create, or provide, a continuously changing wavefront in the first and second sub-beams to reduce the amplitude of an alternating current (AC) component of a sub-push-pull signal (SPP) signal of the first and second sub-beams; and focusing the main beam and the first and second sub-beams on an information storage medium and respectively receiving and dividing the main beam and first and second sub-beams reflected from the information storage medium into a plurality of parts to detect a main push-pull (MPP) signal of the main beam and a SPP signal of the first and second sub-beams; and obtaining the MPP signal and the SPP signal from the signals detected by receiving and dividing the main beam and the first and second sub-beams into the plurality of parts and determining the result obtained by subtracting the SPP signal multiplied by a predetermined coefficient K from the MPP signal as a tracking error signal.

Additional aspects and/or advantages of the invention are set forth in or are evident from the description which follows, or can be learned by practice of the invention.

For a better understanding of the invention, and to show how embodiments of the same may be carried into effect, reference will now be made, by way of example, to the accompanying diagrammatic drawings in which:

FIG. 1 illustrates light spots created on an optical disc to realize a typical DPP method;

FIG. 2 is a schematic diagram of a photodetector receiving a light beam reflected from the optical disc shown in FIG. 1;

FIG. 3 shows the waveforms of a main push-pull (MPP') signal and a sub-push-pull (SPP') signal detected by a typical differential push-pull (DPP) method when there is no shift of an objective lens;

FIG. 4 shows the waveforms of the MPP' and SPP' signals detected by a typical DPP method when there is a shift of an objective lens;

FIG. 5 is a schematic diagram of an optical pickup and an optical recording and/or reproducing apparatus including the optical pickup according to an embodiment of the invention;

FIG. 6 is a schematic plan view of the holographic grating of the optical pickup and the optical recording and/or reproducing apparatus shown in FIG. 5;

FIG. 7 illustrates a main beam spot $LB_m$ and first and second sub-beam spots $LB_{s1}$ and $LB_{s2}$ created on the optical disc of the optical pickup and the optical recording and/or reproducing apparatus shown in FIG. 5;

FIG. 8 shows an example of a photodetector that can be applied to an optical pickup according to aspects of the invention and the main beam spot $LB_m$' and the first and second sub-beam spots $LB_{s1}$' and $LB_{s2}$' being received on the photodetector;

FIG. 9 is a graph illustrating a variation of a push-pull signal amplitude with respect to an astigmatic coefficient W22 when astigmatism is introduced into a beam incident on an optical disc in relation to aspects of the invention;

FIG. 10 shows a baseball pattern of a beam reflected from an optical disc where astigmatism is introduced into a beam incident on the optical disc in relation to aspects of the invention;

FIG. 11 shows the waveforms of a main push-pull (MPP) signal and a sub-push-pull (SPP) signal when there is no shift of an objective lens on the left side and the waveforms of MPP and SPP signals when there is a shift of the objective lens on the right side in relation to aspects of the invention;

FIG. 12A illustrates the main beam spot $LB_m$' and the first and second sub-beam spots $LB_{s1}$' and $LB_{s2}$' being respectively received on the main photodetector and the first and second sub photodetectors when there is no shift of an objective lens in relation to aspects of the invention;

FIG. 12B illustrates the main beam spot $LB_m$' and the first and second sub-beam spots $LB_{s1}$' and $LB_{s2}$' being respectively received on the main photodetector and the first and second sub photodetectors where there is a shift of an objective lens in relation to aspects of the invention;

FIG. 13 is a graph illustrating a variation of a push-pull signal amplitude with respect to a spherical-aberration coefficient W40 where a spherical aberration is introduced into a beam incident on a DVD-RW or DVD-RAM type optical disc, wherein a holographic grating creates a changing wavefront by adding spherical aberrations to plus and minus first-order beams in relation to aspects of the invention;

FIG. 14A shows the shape of a spot created on a DVD type optical disc where a spherical aberration W40 (spherical-aberration coefficient = 0.6λ) exists in relation to aspects of the invention;

FIG. 14B illustrates the normalized intensity distribution of the spot shown in FIG. 14A in relation to aspects of the invention;

FIGS. 15A and 15B respectively show baseball patterns where the beam spot shown in FIG. 14A is incident on and reflected from a DVD-RW type disc and a DVD-RAM type disc in relation to aspects of the invention;

FIG. 16 graph illustrating a variation of a push-pull signal amplitude with respect to a defocus coefficient W20 where a defocus is introduced into a beam incident on a DVD-RW or DVD-RAM type optical disc, wherein a holographic grating creates a changing wavefront by adding the defocus to plus and minus first-order beams in relation to aspects of the invention;

FIG. 17A illustrates the shape of a spot created on a DVD type optical disc where a defocus of W20 (defocus coefficient = 0.8λ) is introduced in relation to aspects of the invention;

FIG. 17B illustrates the normalized intensity distribution of the spot shown in FIG. 17A in relation to aspects of the invention; and

FIG. 18 is a schematic diagram showing the overall configuration of an optical recording and/or reproducing apparatus employing the optical pickup according to an embodiment of the invention.

Reference will now be made in detail to the embodiments of the invention, examples of which are illustrated in the accompanying drawings, wherein like reference numerals refer to the like elements throughout. The embodiments are described below in order to explain the invention by referring to the figures.

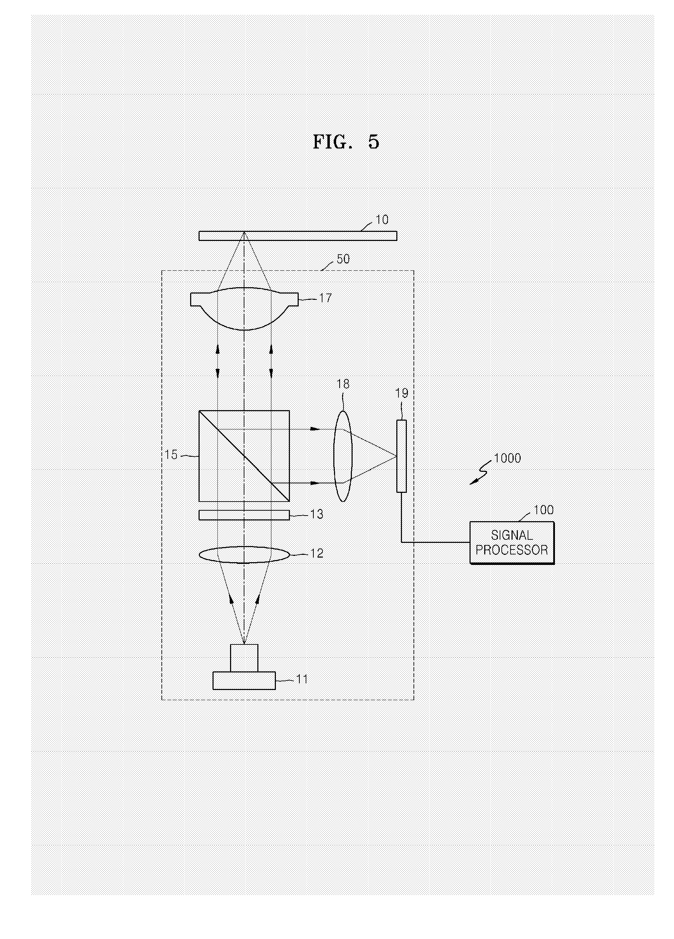

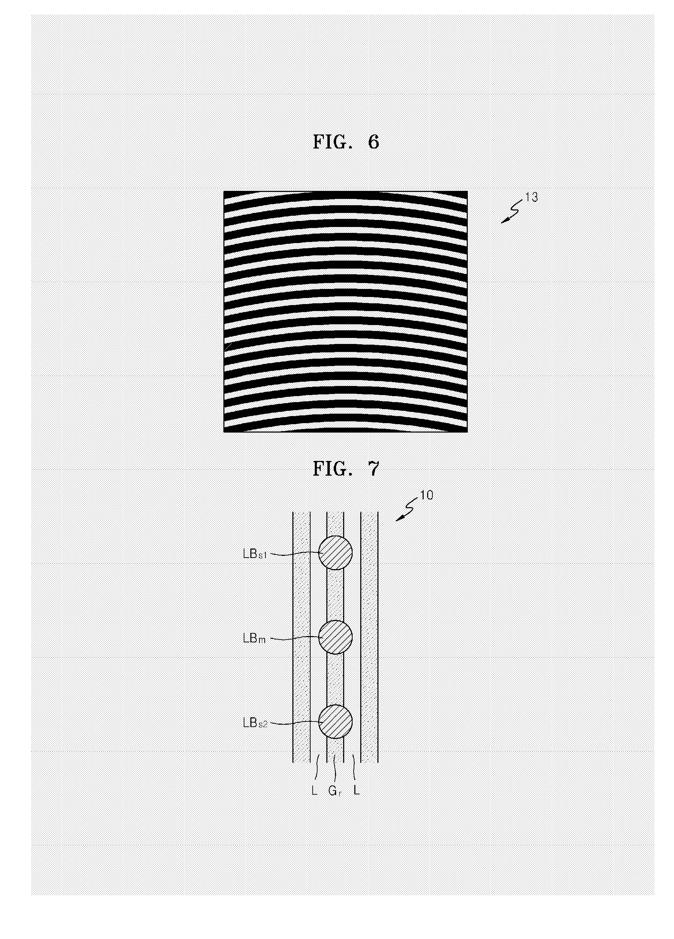

Referring to FIGS. 5 and 6, an optical recording and/or reproducing apparatus 1000 according to an embodiment of the invention includes an optical pickup 50 to realize a tracking servo that is compatible between a plurality of information storage media, i.e., optical discs, such as DVD±RW, DVD-RAM, blu-ray disc (BD) or high-definition DVD (HD DVD) type optical discs, for example, having different track pitches and a signal processor 100 to detect a tracking error signal (TES) defined by Equation (3):

$$TES = MPP - K \times SPP \qquad \dots (3)$$

where K is a coefficient and is determined to optimally remove a DC offset from a main push-pull (MPP) signal considering the amount of direct current (DC) offsets added to the main push-pull (MPP) and sub-push-pull signal (SPP) signals when a shift of the objective lens occurs.

The optical pickup 50 includes a light source 11, an objective lens 17 to focus incident light onto an optical disc 10, a holographic grating 13 to split light emitted by the light source 11 into a main beam and first and second sub-beams by diffraction, and a photodetector 19 to receive the main beam and the first and second sub-beams incident onto and reflected from the optical disc 10. The optical pickup 50 includes a light path changer 15 to change the propagation path of incident light and a collimating lens 12 to collimate light into a parallel beam so that the parallel beam is incident on the objective lens 17.

The light source 11 emits light of a predetermined wavelength suitable to record and/or reproduce information to and/or from the optical disc 10. For example, the light source 11 can emit red light suitable for a DVD, e.g., light with 650 nm wavelength, or blue light that satisfies a blu-ray disc (BD) and high-definition DVD (HD DVD) formats, e.g., light with a 405 nm wavelength.

Where the light source 11 emits red light suitable for a DVD type disc, the optical pickup 50 and the optical recording and/or reproducing apparatus 1000 including the optical pickup 50 can provide a tracking servo that is compatible between DVD-RAM and DVD±R/RW type discs having different track pitches. In this case, the objective lens 17 can have an effective numerical aperture (NA) of 0.6 suitable for a DVD type disc.

Where the light source 11 emits blue light suitable for BD and HD DVD type discs, the optical pickup 50 and the optical recording and/or reproducing apparatus 1000 including the optical pickup 50 can provide a tracking servo that is compatible between BD and HD DVD type discs having different track pitches, as well as between HD DVD-R and HD DVD-RW type discs under an HD DVD format. To provide compatibility between BD and HD DVD type discs, the objective lens 17 can respectively have a 0.85 NA and a 0.65 NA suitable for BD and HD DVD type discs.

As described above, the optical pickup 50 and the optical recording and/or reproducing apparatus 1000 employing the optical pickup 50 can record and/or reproduce information to and/or from a plurality of optical discs having different track pitches. In this regard, DVD-RAM and DVD±RW type discs under a DVD format have the same light source wavelength, objective NA, and disc substrate thickness but different track pitches and optical disc structure. In the DVD format, a light source has a wavelength of 650 nm and an objective lens has an NA of 0.6.

Also, BD and HD DVD standards, that are considered next-generation optical disc formats, have the same light source wavelength but different optical disc thickness, objective NAs, and track pitches. Specifically, for example, a BD standard specifies a 405 nm wavelength light source, a 0.1 mm thick optical disc (cover layer), and a 0.85 NA objective lens. A HD DVD standard specifies a 405 nm wavelength light source, a 0.6 mm thick optical disc (substrate), and a 0.65 NA objective lens.

FIG. 5 shows a separate-type optical system including the light source 11 and the photodetector 19 separated from each other. In the optical pickup 50 of FIG. 5, the light source 11 can emit light with a single wavelength. The light source 11 can also be a multi-type light source emitting light with a plurality of wavelengths to provide compatibility between a plurality of optical disc formats, e.g., between DVD type discs and one or more BD or HD DVD type discs. The holographic grating 13 of the optical pickup 50 can further constitute a holographic optical module to provide compatibility between a plurality of optical discs using light of different wavelengths. The optical pickup 50 can also have other various optical configurations to provide compatibility between a plurality of optical disc formats.

In the optical pickup 50, the holographic grating 13 splits light emitted by the light source 11 into a main beam and first and second sub-beams by diffraction and provides, or creates, a continuously changing wavefront in the first and second sub-beams to reduce the amplitude of an alternating current (AC) component of a sub-push-pull (SPP) signal of the first and second sub-beams. The main beam and the first and second sub-beams can be zero-order and plus and minus first-order diffracted beams, respectively.

The holographic grating 13 creates a continuously changing wavefront by adding one of astigmatism, spherical aberration, or defocus to the first and second sub-beams in order to reduce the amplitude of the AC component of the SPP signal of the first and second sub-beams. FIG. 6 shows an example of the holographic grating 13 to create a continuously changing wavefront by adding astigmatism to the first and second sub-beams.

FIG. 7 illustrates a main beam spot $LB_m$ and first and second sub-beam spots $LB_{s1}$ and $LB_{s2}$ being created on the optical disc 10, where the main beam spot $LB_m$ is located on groove Gr and the sub-beam spots $LB_{s1}$ and $LB_{s2}$ are also located on groove Gr. As shown in FIG. 7, the main beam spot $LB_m$ and the first and second sub-beam spots $LB_{s1}$ and $LB_{s2}$ can be created on the same track of the optical disc 10.

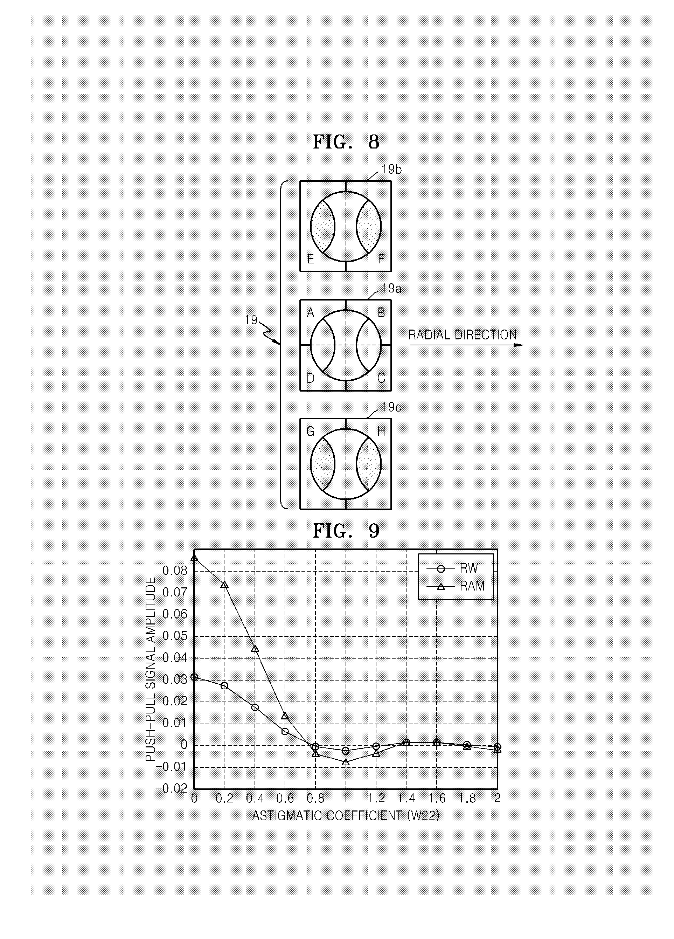

As shown in FIG. 8, the photodetector 19 of the optical pickup 50 is provided to obtain a main push-pull (MPP) signal of the main beam and a SPP signal of the first and second sub-beams. FIG. 8 shows an example of the photodetector 19 that can be applied to the optical pickup 50 and the main beam spot $LB_m$' and the first and second sub-beam spots $LB_{S1}$' and $LB_{S2}$' being received on the photodetector 19. The photodetector 19 includes a main photodetector 19a to receive the main beam spot $LB_m$' to generate the MPP signal of the main beam and the first and second sub photodetectors 19b and 19c to receive the first and second sub-beam spots $LB_{S1}$' and $LB_{S2}$' to generate a SPP signal of first and second sub-beams.

The main photodetector 19a is divided into two halves in both the radial and tangential directions, thus creating four light-receiving areas A, B, C, and D. Where detection signals are denoted by the same reference characters as those of the corresponding light-receiving areas, a MPP signal obtained using the detection signals generated by the main photodetector 19a is represented as (A+D) - (B+C) .

The first and second sub photodetectors 19b and 19c are respectively divided into two halves in a radial direction, thus creating two light-receiving areas E and F and G and H, respectively. Where detection signals are denoted by the same reference characters as those of the corresponding light-receiving areas, a SPP signal obtained using the detection signals from the first and second sub photodetectors 19b and 19c is represented as (E-F)+(G-H).

As described above, where the holographic grating 13 provides, or creates, a continuously changing wavefront by adding astigmatism, spherical aberration, or defocus to the first and second sub-beams, and the photodetector 19 generates an MPP signal of the main beam and a SPP signal of the first and second sub-beams, a tracking servo compatible between a plurality of optical discs with different track pitches can be provided.

The signal processor 100 detects a TES from detection signals generated by the four light-receiving areas A, B, C, and D of the main photodetector 19a and detection signals generated by the light-receiving areas E, F, G and H of the first and second sub photodetectors 19a and 19c, respectively, according to the above described Equation (3). For example, the signal processor 100 can include a first differentiator to receive detection signals obtained by the main photodetector 19a to generate an MPP signal, a second differentiator to receive detection signals obtained by the first and second sub photodetectors 19b and 19c to generate a SPP signal, a gain adjuster to increase or decrease the SPP signal by the coefficient K, and a third differentiator to subtract the adjusted SPP signal from the MPP signal to output a TES.

The optical pickup 50 and the optical recording and/or reproducing apparatus 1000 detect a TES by adding, for example, astigmatism to the plus and minus first-order diffracted beams (the first and second sub-beams) using the holographic grating 13 and removing the direct current (DC) offset of the MPP signal induced due to a shift of the objective lens 17 using the resulting sub-beams. The TES detection method according to the invention can be applied regardless of the position of a sub-beam spot, thereby obtaining a TES regardless of a track pitch of the optical disc 10.

The principle of detecting a TES regardless of a track pitch using the TES detection method according to the invention will now be described with reference to a DVD-RAM and a DVD-RW type discs having different track pitches. Where a beam is incident on the recordable optical disc 10, the beam reflected and diffracted by the recordable optical disc proceeds back through the objective lens 17. A baseball pattern is thus provided, or created, in the reflected beam due to interference in a region where plus and minus first-order beams and a zero-order beam diffracted from the optical disc 10 by a pattern on the disc surface overlap each other, thereby obtaining a push-pull signal.

Where the incident beam is a plane wave that undergoes no change in wavefront due to aberration, the distribution of a phase difference between the zero-order beam and the plus and minus first-order beams is uniform across the entire overlapping region, and the brightness of a baseball pattern is uniform over the entire overlapping region. As a beam spot moves perpendicular to a track (in a radial direction), a typical push-pull signal is obtained.

On the other hand, where a wavefront is caused to continuously change by adding aberrations to an incident beam as described above, since a phase difference between a zero-order and plus and minus first-order beams varies depending on the position of an interference region, an interference pattern is provided, or created, within a baseball pattern, thereby reducing the amplitude of a push-pull signal. Thus, the push-pull signal is removed by introducing a sufficient amount of aberrations.

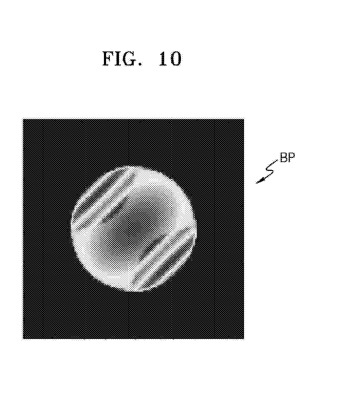

As evident from FIG. 9, where astigmatism is introduced into a beam incident on a DVD-RW or DVD-RAM type optical disc, the amplitude of a push-pull signal is reduced according to an astigmatic coefficient W22. Where the astigmatic coefficient W22 exceeds a specific, or predetermined, value, the push-pull signal is eliminated and FIG.10 shows a baseball pattern BP in this regard. FIG. 10 shows the baseball pattern BP of a beam reflected from a DVD-RW type optical disc where an astigmatic coefficient W22 of an incident beam is $0.8\lambda$, and is introduced into a beam incident on the optical disc 10. In this regard, referring to FIG. 10, a diffraction pattern is formed, or created, within the baseball pattern BP.

Where a shift of the objective lens 17 occurs and a push-pull signal is eliminated due to astigmatism added to an incident beam, a DC offset is introduced into the push-pull signal due to the shift of the objective lens 17. That is, the push-pull signal with only a DC offset can be obtained.

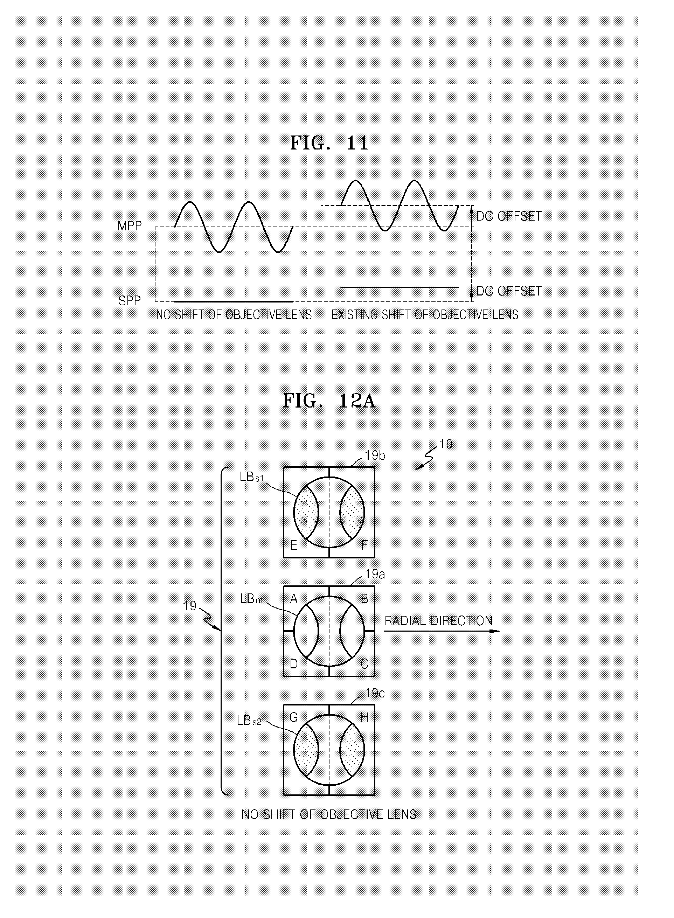

Also, where the holographic grating 13 is used in a light-transmitting part of the optical pickup 50, a main beam (zero-order diffracted beam) of three beams being incident on the optical disc 10 becomes a plane wave without being affected by the holographic grating 13, while sub-beams (plus and minus first-order diffracted beams) have astigmatisms introduced due to the holographic pattern of the holographic grating 13. In this regard, as shown in FIG. 11, an MPP signal has an AC component, while a SPP signal has no AC component. The left side of FIG. 11 shows the MPP and SPP signals when there is no shift of the objective lens 17 and the right side of FIG. 11 depicts the MPP and SPP signals where there is a shift of the objective lens 17.

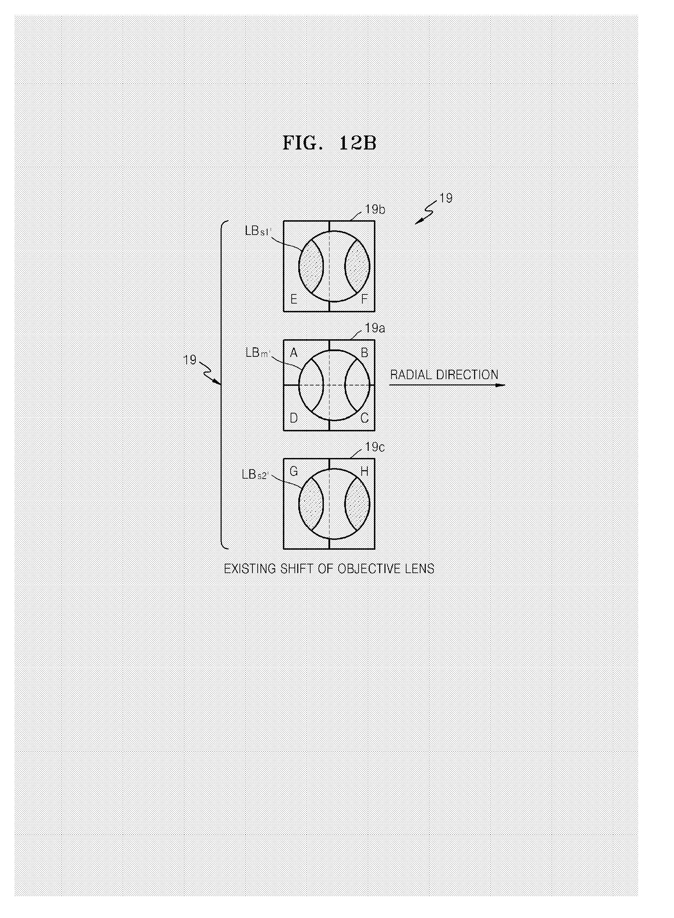

FIG. 12A illustrates main beam spot $LB_m'$ and first and second sub-beam spots $LB_{s1}'$ and $LB_{s2}'$ being respectively received on the main photodetector 19a and the first and second sub photodetectors 19b and 19c of the photodetector 19, where there is no shift of the objective lens 17. FIG. 12B illustrates the main beam spot $LB_m'$ and first and second sub-beam spots $LB_{s1}'$ and $LB_{s2}'$ being respectively received on the main photodetector 19a and the first and second sub photodetectors 19b and 19c of the photodetector 19, where there is a shift of the objective lens 17.

Where there is no shift of the objective lens 17, such as shown in FIG. 12A, the MPP and SPP signals have no DC offset as shown on the left side of FIG. 11, and the MPP signal produces a TES based on level 0 while the SPP signal produces a DC signal with level 0. Since the interference patterns are created in the baseball patterns of the first and second sub-beam spots $LB_{S1}'$ and $LB_{s2}'$ having astigmatisms, an oscillating push-pull signal is scarcely, or not noticeably, generated.

Conversely, where there is a shift of the objective lens 17, such as shown in FIG. 12B, the main beam spot $LB_m'$ and first and second sub-beam spots $LB_{s1}'$ and $LB_{s2}'$ on the photodetector 19 move by the same amount to introduce DC components into them as shown on the right side of FIG. 11. In this regard, the MPP signal oscillates with a uniform DC offset while the SPP signal only has a DC offset, and, where the shift of the objective lens 17 occurs, the SPP signal has a DC component as its main component. Thus, the DC offset introduced into the MPP signal due to the shift of the objective lens 17 can be removed by using the DC offset of the SPP signal.

The TES detection method, according to aspects of the invention, as described above, and the optical pickup 50 and the optical recording and/or reproducing apparatus 1000 to perform the TES detection method, according to the invention, provides the removal of a DC offset introduced into an MPP signal where a shift of the objective lens 17 occurs without a loss of an AC component, thereby providing a tracking servo compatible between a plurality of different optical discs with different track pitches. Also, where the holographic grating 13 provides a changing wavefront by introducing astigmatisms into the plus and minus first-order beams, the holographic grating 13 can provide a changing wavefront by adding spherical aberrations or defocus to the plus and minus first-order beams.

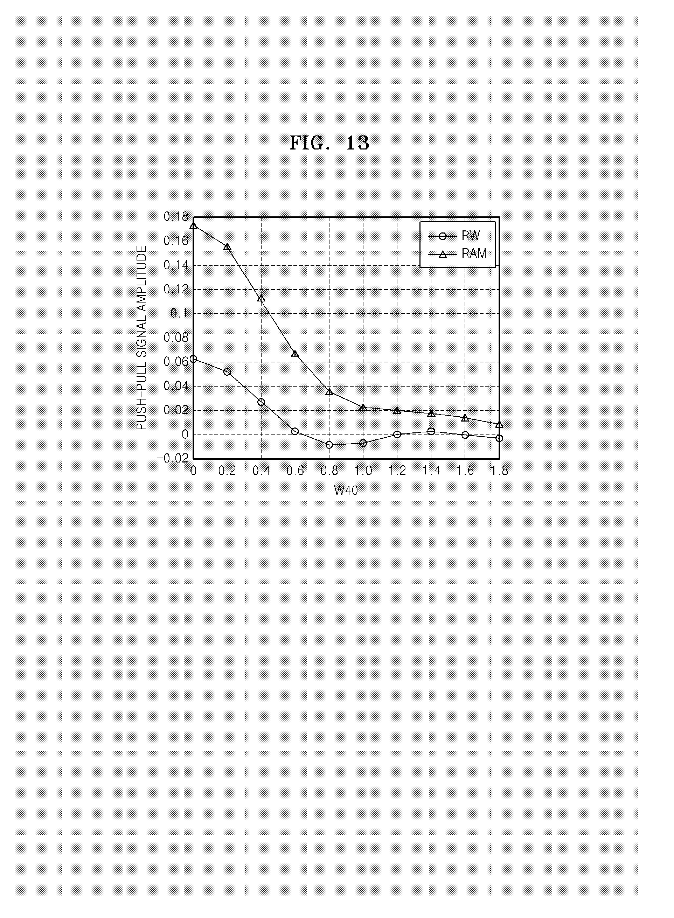

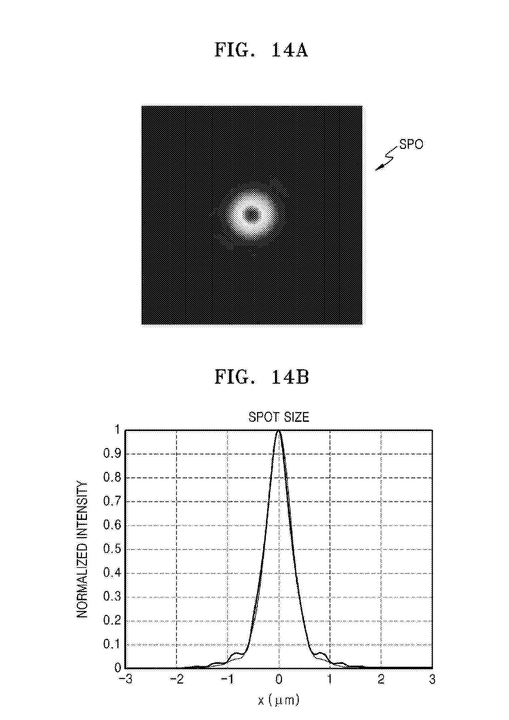

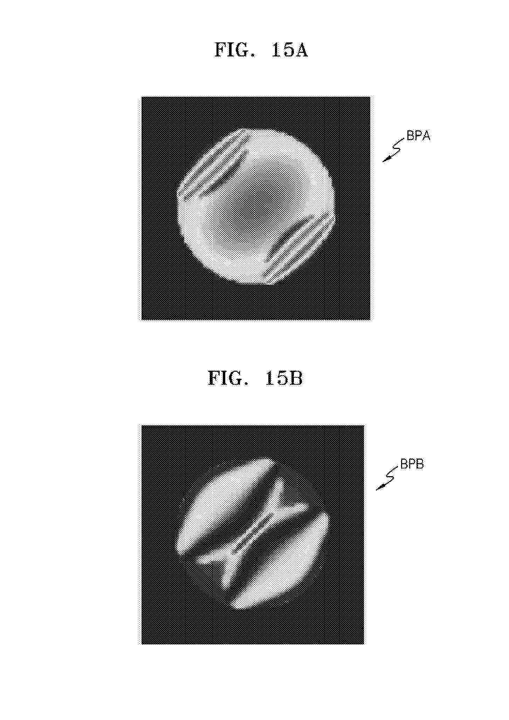

FIG. 13 is a graph illustrating a push-pull signal amplitude with respect to a spherical-aberration coefficient W40 where a spherical aberration is introduced into a beam incident on a DVD-RW or DVD-RAM type optical disc, such as by allowing the holographic grating 13 to provide, or create, a changing wavefront by adding spherical aberrations to plus and minus first-order beams. FIG. 14A shows the shape of a spot SPO created on a DVD disc where W40 (spherical-aberration coefficient) = $0.6\lambda$, and FIG. 14B illustrates the normalized intensity distribution of the spot SPO shown in FIG. 14A. FIGS. 15A and 15B respectively show baseball patterns BPA and BPB where the beam spot SPO shown in FIG. 14A is incident on and reflected from a DVD-RW type disc and a DVD-RAM type disc.

As evident from FIG. 13, where spherical aberration is introduced into a beam incident on a DVD-RW or DVD-RAM type optical disc, the amplitude of a push-pull signal is also reduced according to a spherical-aberration coefficient W40 because an interference pattern is provided, or created, due to the added spherical aberration in a region where the zero-order beam and the plus and minus first-order beams diffracted by a pattern on a disc surface overlap each other, such as evident from the baseball patterns BPA and BPB shown in FIGS. 15A and 15B.

In the graph of FIG. 13, there is no spherical-aberration coefficient (W40) within the range of $0\lambda$ to $1.8\lambda$, for which push-pull signals of DVD-RW and DVD-RAM type discs are eliminated at the same time, unlike that in FIG. 9, which illustrates the push-pull signal amplitude with respect to the astigmatic coefficient W22 where astigmatism is introduced into an incident beam. However, for example, where the holographic grating 13 has a spherical-aberration coefficient W40 of $0.6\lambda$, a push-pull signal of a DVD-RW type disc can be eliminated completely, while a push-pull signal of DVD-RAM type disc has a significantly small amplitude compared to a signal having no spherical aberration, although the push-pull signal of DVD-RAM type disc cannot be completely eliminated.

Thus, in the case of DVD-RW type discs, where a changing wavefront is provided, or created, by introducing spherical aberrations into sub-beams, a TES from which a DC offset has been removed can also be detected when a shift of the objective lens 17 occurs. In the case of DVD-RAM type discs, it is also possible to detect a TES with smaller amplitude than a MPP signal, from which a DC offset has been removed.

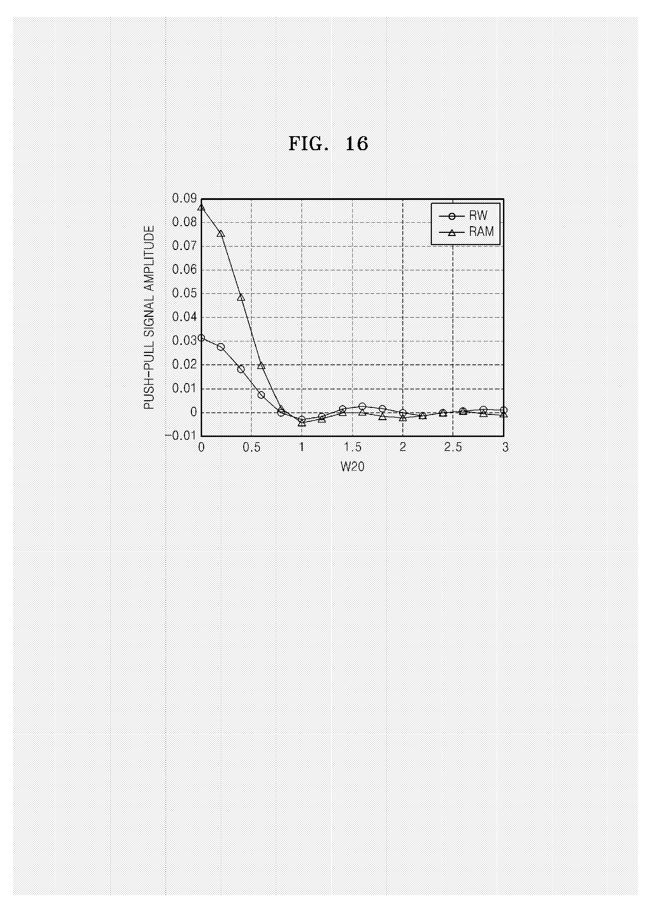

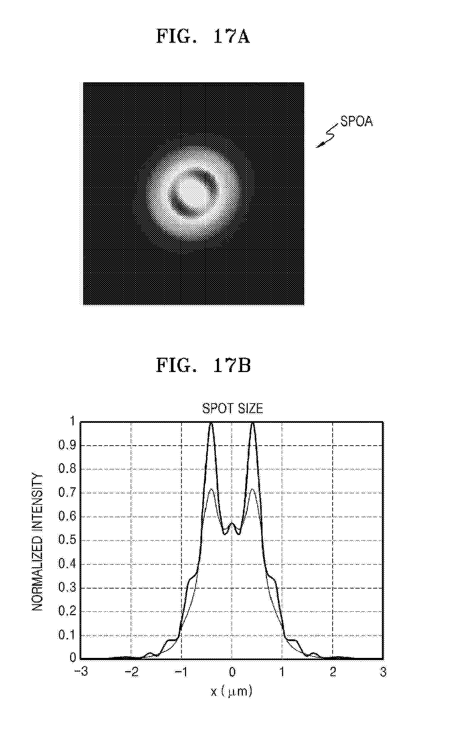

FIG. 16 graph illustrating a push-pull signal amplitude with respect to a defocus coefficient W20 where a defocus is introduced into a beam incident on a DVD-RW or DVD-RAM type optical disc, such as by the holographic grating 13 providing, or creating, a changing wavefront by adding the defocus to plus and minus first-order beams. FIG. 17A illustrates the shape of a spot SPOA created on a DVD type optical disc where W20 (defocus coefficient) = $0.8\lambda$, and FIG. 17B illustrates the normalized intensity distribution of the spot SPOA shown in FIG. 17A.

As evident from FIG. 16, when a defocus is introduced into a beam incident on a DVD-RW or DVD-RAM type optical disc, the amplitude of a push-pull signal is reduced according to a defocus coefficient W20. Where the defocus coefficient W20 exceeds a specific value, the push-pull signal is eliminated. Thus, where a changing wavefront is provided by introducing a defocus into sub-beams, a TES from which a DC offset has been removed can also be detected for both DVD-RAM and DVD-RW type discs, where a shift of the objective lens 17 occurs.

Therefore, where the holographic grating 13 provides, or creates, a continuously changing wavefront by introducing spherical aberrations or defocus to the sub-beams in order to reduce an AC component of a SPP signal of the sub-beams, aspects of the invention provide a tracking servo that is compatible between a plurality of different optical discs having different track pitches.

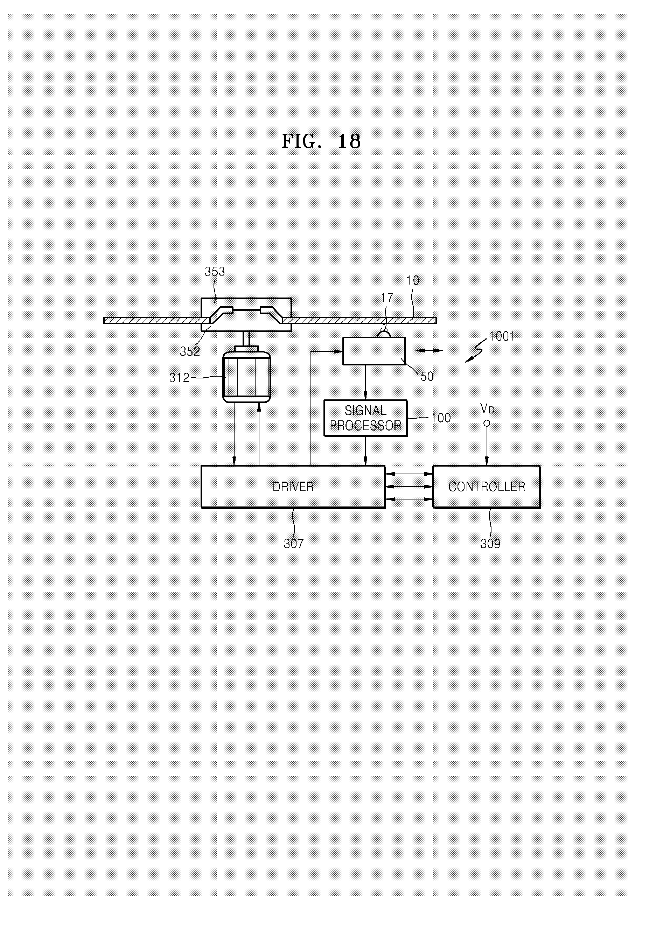

FIG. 18 is a schematic diagram showing the overall configuration of an optical recording and/or reproducing apparatus 1001 employing the optical pickup 50. Referring to FIG. 18, the optical recording and/or reproducing apparatus 1001 includes a spindle motor 312 to rotate the optical disc 10, the optical pickup 50, that is installed movably along a radial direction of the optical disc 10, to reproduce information and/or record information from and/or on the optical disc 10, a signal processor 100 to detect a TES from detection signals received from the optical pickup 50 to provide a tracking servo compatible between a plurality of different optical discs having different track pitches, a driver 307 to drive the spindle motor 312 and the optical pickup 50, and a controller 309 to control focus, tracking and/or tilt servos of the optical pickup 50. The controller 309, as well as the signal processor 100, can be any suitable processing device, such as a processor, microprocessor or an application specific integrated circuit (ASIC), with associated memory and software or programming, to control the operations of the optical recording and/or reproducing apparatus 1001 in the case of the controller 309, or to perform the functions of signal processing in the case of the signal processor 100, respectively. Also, the reference numerals 352 and 353 denote a turntable and a clamp to chuck the optical disc 10, respectively.

In the optical recording and/or reproducing apparatus 1001, a beam reflected from the optical disc 10 is detected by the photodetector 19 mounted in the optical pickup 50 (see FIG. 5) and photoelectrically converted into an electrical signal. The signal processor 100 receives the electrical signal to generate a TES that is then input to the controller 309 through the driver 307. The signal processor 100 can also detect a focus error signal and/or a tilt signal from the electrical signal output from the photodetector 19.

The driver 307 controls the rotating speed of the spindle motor 312, amplifies an input signal, and drives the optical pickup 50, under control of the controller 309. The controller 309 sends focus servo, tracking servo, and/or tilt servo commands, which have been adjusted based on the signal received from the driver 307, back to the driver 307 so that the optical pickup 50 can perform focusing, tracking, and/or tilt operations.

Thus, the optical recording and/or reproducing apparatus according to aspects of the invention, such as the optical recording and/or reproducing apparatus 1000 of FIG. 5 or 1001 of FIG. 18, employing the optical pickup 50 can provide a tracking servo that is compatible between a plurality of optical discs with different track pitches, such as BD and HD DVD type discs having different track pitches or between DVD±R/RW and DVD-RAM type discs having different track pitches under a DVD format, thus allowing recording and/or reproducing of information to and/or from the plurality of discs.

Therefore, as described above, the apparatus, methods and processes of the invention provide a tracking servo that is compatible between a plurality of optical discs having different track pitches, thereby enabling recording and/or reproducing of information to and/or from the plurality of discs with different track pitches.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  An optical pickup, comprising:

a light source (11) adapted to emit light;

an objective lens (17) adapted to collect and focus an incident beam of the light on an information storage medium (10);

a holographic grating (13) adapted to split the light emitted by the light source (11) into a main beam and first and second sub-beams by diffraction and to provide a continuously changing wavefront in the first and second sub-beams to reduce the amplitude of an alternating current (AC) component of a sub-push-pull (SPP) signal of the first and second sub-beams; and

a photodetector (19) adapted to receive the main beam and the first and second sub-beams that are focused on and reflected from the information storage medium (10) and formed to provide a main push-pull (MPP) signal of the main beam and the sub-push-pull (SPP) signal of the first and second sub-beams.

2. The optical pickup of claim 1, wherein the holographic grating (13) is adapted to provide a continuously changing wavefront by adding astigmatisms, spherical aberrations, or defocus to the first and second sub-beams to reduce the amplitude of the alternating current (AC) component of the sub-push-pull (SPP) signal of the first and second sub-beams.

3. The optical pickup of claim 2, wherein the sub-push-pull (SPP) signal of the first and second sub-beams includes a direct current (DC) component as a main component of the sub-push-pull (SPP) signal where a shift of the objective lens (17) occurs.

4. The optical pickup of any preceding claim, wherein the sub-push-pull (SPP) signal of the first and second sub-beams includes a direct current (DC) component as a main component of the sub-push-pull (SPP) signal where a shift of the objective lens (17) occurs.

5. The optical pickup of any preceding claim, wherein the main beam comprises a zero-order diffracted beam, and the first and second sub-beams comprise plus and minus first-order diffracted beams.

6. The optical pickup of any preceding claim, wherein the main beam and the first and second sub-beams are focused on the same track of the information storage medium (10).

7. The optical pickup of any preceding claim, wherein the light source (11) is adapted to emit light in a red wavelength region, and the optical pickup is adapted to provide a tracking servo that is compatible between DVD-RAM and DVD±R/RW type discs.

8. The optical pickup of any one of claims 1 to 6 wherein the light source (11) is adapted to emit light in a blue wavelength region, and the optical pickup is adapted to provide a tracking servo that is compatible between blu-ray (BD) and high-definition DVD (HD DVD) type discs.

9. An optical recording and/or reproducing apparatus, comprising an optical pickup of any one of claims 1 to 6; and a signal processor (100) adapted to receive signals detected by a photodetector (19) in the optical pickup to detect a tracking error signal (TES), wherein the TES = MPP- KxSPP, where MPP is a main push-pull signal (MPP) of a main beam of light, SPP is a sub-push-pull signal (SPP) of first and second sub-beams of the light, and K is a coefficient.

10. The apparatus of claim 9, wherein the light source (11) is adapted to emit light in a red wavelength region, and the optical pickup is adapted to provide a tracking servo that is compatible between DVD-RAM and DVD±R/RW type discs.

11. The apparatus of claim 9, wherein the light source (11) is adapted to emit light in a blue wavelength region, and the optical pickup is adapted to provide a tracking servo that is compatible between blu-ray (BD) and high-definition DVD (HD DVD) type discs.

12. A method of detecting a tracking error signal, comprising:

splitting light emitted by a light source (11) into a main beam and first and second sub-beams by diffraction and creating a continuously changing wavefront in the first and second sub-beams to reduce the amplitude of an alternating current (AC) component of a sub-push-pull (SPP) signal of the first and second sub-beams;

focusing the main beam and the first and second sub-beams on an information storage medium (10) and respectively receiving and dividing the main beam and the first and second beams reflected from the information storage medium (10) into a plurality of parts to detect a main push-pull (MPP) signal of the main beam and the sub-push-pull (SPP) signal of the first and second sub-beams; and

obtaining the main push-pull (MPP) signal and the sub-push-pull (SPP) signal from signals detected by receiving and dividing the main beam and the first and second sub-beams into the plurality of parts and detecting a result obtained by subtracting the sub-push pull (SPP) signal multiplied by a predetermined coefficient from the main push-pull (MPP) signal as the tracking error signal.

13. The method of claim 12, wherein the creating the continuously changing wavefront in the first and second sub-beams comprises adding astigmatisms, spherical aberrations, or defocus to the first and second sub-beams to reduce the amplitude of an alternating current (AC) component of the sub-push-pull (SPP) signal of the first and second sub-beams.

14. The method of claim 13, wherein the sub-push-pull (SPP) signal of the first and second sub-beams comprises a direct current (DC) component as a main component of the sub-push-pull (SPP) signal.

15. The method of any one of claims 12 to 14, wherein the main beam and the first and second sub-beams are focused on the same track of the information storage medium (10).

16. The method of any one of claims 12 to 15, wherein the sub-push-pull (SPP) signal of the first and second sub-beams comprises a direct current (DC) component as a main component of the sub-push-pull (SPP) signal.

17. The method of any one of claims 12 to 16, further comprising emitting light by the light source (11) in a red wavelength region, wherein the creating in the light in the red wavelength region the continuously changing wavefront in the first and second sub-beams provides a tracking servo that is compatible between DVD-RAM and DVD±R/RW type discs.

18. The method of any one of claims 12 to 17, further comprising emitting light by the light source (11) in a blue wavelength region, wherein the creating in the light in the blue wavelength region the continuously changing wavefront in the first and second sub-beams provides a tracking servo that is compatible between blu-ray (BD) and high-definition DVD (HD DVD) type discs.

19. The method of any one of claims 12 to 18, wherein the main beam comprises a zero-order diffracted beam, and the first and second sub-beams comprise plus and minus first-order diffracted beams.

20. A method of creating a tracking servo compatible between a plurality of discs, comprising:

splitting light emitted by a light source (11) into a main beam and first and second sub-beams by diffraction; and creating a continuously changing wavefront in the first and second sub-beams to reduce the amplitude of an alternating current (AC) component of a sub-push-pull (SPP) signal of the first and second sub-beams.

21. The method of claim 20, wherein the creating the continuously changing wavefront in the first and second sub-beams comprises adding astigmatisms, spherical aberrations, or defocus to the first and second sub-beams to reduce the amplitude of an alternating current (AC) component of the sub-push-pull (SPP) signal of the first and second sub-beams.

22. The method of claim 20 or claim 21, wherein the sub-push-pull (SPP) signal of the first and second sub-beams comprises a direct current (DC) component as a main component of the sub-push-pull (SPP) signal.

23. The method of any one of claims 20 to 22, wherein the splitting the light emitted by the light source (11) comprises splitting light in the red wavelength region into the main beam and the first and second sub-beams by diffraction, and the creating the continuously changing wavefront in the light in the red wavelength region provides a tracking servo that is compatible between DVD-RAM and DVD±R/RW type discs.

24. The method of any one of claims 20 to 22, wherein the splitting the light emitted by the light source (11) comprises splitting light in the blue wavelength region into the main beam and the first and second sub-beams by diffraction; and the creating the continuously changing wavefront in the light in the blue wavelength region provides a tracking servo that is compatible between blu-ray (BD) and high-definition DVD (HD DVD) type discs.

**25.** The method of any one of claims 20 to 24, wherein the main beam comprises a zero-order diffracted beam, and the first and second sub-beams comprise plus and minus first-order diffracted beams.

FIG. 1 (PRIOR ART)

## FIG. 2 (PRIOR ART)

RADIAL DIRECTION

EP 1 708 184 A2

FIG. 3 (PRIOR ART)

MPP'

SPP'

NO SHIFT OF OBJECTIVE LENS

FIG. 4 (PRIOR ART)

MPP'

DC OFFSET

SPP'

DC OFFSET

EXISTING SHIFT OF OBJECTIVE LENS

FIG. 5

SIGNAL
PROCESSOR

FIG. 6

FIG. 7

FIG. 8

RADIAL DIRECTION →

FIG. 9

FIG. 10

FIG. 11

MPP

SPP

DC OFFSET

DC OFFSET

NO SHIFT OF OBJECTIVE LENS    EXISTING SHIFT OF OBJECTIVE LENS

FIG. 12A

19

LBs1'    19b

E    F

LBm'    19a

A    B

RADIAL DIRECTION

D    C

19

LBs2'    19c

G    H

NO SHIFT OF OBJECTIVE LENS

FIG. 12B

RADIAL DIRECTION

EXISTING SHIFT OF OBJECTIVE LENS

FIG. 13

FIG. 14A

FIG. 14B

FIG. 15A

BPA

FIG. 15B

BPB

FIG. 16

FIG. 17A

FIG. 17B

FIG. 18